# EUROPEAN PATENT SPECIFICATION

(11) **EP 2 857 193 B1**
(45) Date of publication and mention of the grant of the patent: **20.02.2019**
(21) Application number: 13800750.5
(22) Date of filing: 03.06.2013
(51) Int. Cl.: B32B 18/00, B32B 9/00, C04B 41/87, C04B 41/89

(54) **CERAMIC MATRIX COMPOSITE COMPONENT COATED WITH ENVIRONMENTAL BARRIER COATINGS AND METHOD OF MANUFACTURING THE SAME**
KERAMIKMATRIX-VERBUNDSTOFFKOMPONENTE BESCHICHTET MIT EINER UMWELTBARRIERE UND EIN VERFAHREN ZUR HERSTELLUNG DAVON
COMPOSANT COMPOSITE DE MATRICE CÉRAMIQUE REVÊTU PAR UNE BARRIÈRE ENVIRONNEMENTALE ET SON PROCÉDÉ DE FABRICATION

(30) Priority: 04.06.2012 JP 2012126867
(43) Date of publication of application: 08.04.2015
(73) Proprietor: IHI Corporation, Tokyo 135-8710 (JP)
(72) Inventor: NAKADA, Yukihiro, Tokyo 135-8710 (JP); MURATA, Hiroshige, Tokyo 135-8710 (JP); WATANABE, Kenichiro, Tokyo 135-8710 (JP); TANAKA, Yasutomo, Tokyo 135-8710 (JP); NAKAMURA, Takeshi, Tokyo 135-8710 (JP)
(74) Representative: Carpmael, Robert Maurice Charles
(86) International application number: PCT/JP2013/065331
(87) International publication number: WO 2013/183580

(56) References cited:
- EP-A1- 2 264 208
- EP-A2- 1 683 775
- WO-A1-98/24737
- JP-A- H09 201 894
- JP-A- 2006 028 015
- JP-A- 2008 247 722
- JP-A- 2011 032 165
- JP-A- 2011 046 598
- US-A1- 2009 184 280
- US-A1- 2009 186 237
- US-A1- 2011 256 411
- F STOLZENBURG ET AL: "Stresses in ytterbium silicate multilayer environmental barrier coatings", 60TH ANNUAL DENVER X-RAY CONFERENCE, 1 - 5 AUGUST 2011, COLORADO SPRINGS, CO [US]., vol. D-46, 4 August 2011 (2011-08-04), pages 106-115, XP55201497,

## Description

### [Technical Field]

The present invention relates to a ceramic matrix composite component coated with environmental barrier coatings and a method of manufacturing the same, and particularly to a ceramic matrix composite component which is used as a high-temperature component of a jet engine, a rocket engine, or the like used in a high-temperature gas environment containing water vapor and a method of manufacturing the same.

### [Background Art]

In recent years, ceramic matrix composites (CMCs) have received attention as high-temperature components such as turbine components and shroud components of jet engines, thrusters and combustion gas tubes of rocket engines, and the like used in high-temperature gas environments containing water vapor because ceramic matrix composites have more excellent heat resistance and higher specific strength at high temperature than heat-resistant alloys such as nickel alloys.

On the other hand, it has been known that water vapor in high-temperature gas causes the surface recession of Si-containing material. In the case where a silicide-containing ceramic matrix composite is selected as a substrate for a high-temperature component, oxidation resistance and water vapor resistance need to be ensured.

Patent Literature 1 describes a gas turbine engine combustor component and the like. The gas turbine engine combustor component includes a substrate formed of silicon-containing material, an environmental barrier layer overlaid on the substrate, a transition layer overlaid on the environmental barrier layer, and a top coat overlaid on the transition layer.

Patent Literature 2 also describes an article to be exposed to the hostile thermal environment of a gas turbine engine. It likewise describes a thermal/environmental barrier coating with a transition layer for silicon-comprising materials. It has a substrate formed of silicon-comprising material, the environmental barrier layer, the transition layer (oxide stabilised) and then a metal oxide stabilised layer as a top coat.

### [Citation List]

### [Patent Literature]

[PTL 1]
   Japanese Patent No. 4901192
[PTL 2]
   European Patent Application No. EP1683775

### [Summary of Invention]

### [Technical Problem]

High-temperature components such as jet engine turbine components are exposed to thermal cycles in which high temperature (for example, component surface temperature is 1200°C to 1400°C) and low temperature (for example, component surface temperature is 600°C or lower) are repeated, in high-temperature gas environments containing water vapor (for example, the partial pressure of water vapor contained in combustion gas is 30 kPa to 140 kPa).

There is a case where a surface of a silicide-containing ceramic matrix composite is coated with, for example, a multilayer coating such as described in Patent Literature 1 to provide oxidation resistance and water vapor resistance to a high-temperature component. In this case, the delamination of the multilayer coating may occur over almost the entire surface in a short time due to poor adhesion between layers, cyclic thermal stresses caused by thermal cycles, or the like to impair the oxidation resistance and the water vapor resistance of the high-temperature component.

Accordingly, an object of the present invention is to provide a ceramic matrix composite component coated with environmental barrier coatings which has further improved oxidation resistance and water vapor resistance even when exposed to thermal cycles in a high-temperature gas environment containing water vapor, and a method of manufacturing the same.

EP2264208A discloses SiC series ceramic matrix composites provided with a mixed mullite-ytterbium silicate layer followed by an oxide layer (HfO₂).

The present invention is in the ceramic matrix composite component coated with environmental barrier coatings as defined in claim 1.

In the ceramic matrix composite component according to the present invention, the ytterbium silicate may be any one of Yb₂SiO₅ and Yb₂Si₂O₇.

In the ceramic matrix composite component according to the present invention, the silicon carbide layer may have a thickness of not less than 10 µm nor more than 50 µm, the silicon layer has a thickness of not less than 50 µm nor more than 140 µm, and the mixed layer has a thickness of not less than 75 µm nor more than 225 µm.

In the ceramic matrix composite component according to the present invention, the silicon layer may have a thickness of not less than 50 µm nor more than 100 µm.

In the ceramic matrix composite component according to the present invention, the oxide layer is formed of oxide mainly containing at least one selected from the group consisting of hafnium oxide, hafnium silicate, lutetium silicate, ytterbium silicate, titanium oxide, zirconium oxide, aluminum titanate, aluminum silicate, and lutetium hafnium oxide.

In the ceramic matrix composite component according to the present invention, the oxide layer may be formed of monoclinic hafnium oxide.

In the ceramic matrix composite component according to the present invention, the silicon carbide layer may be a chemical vapor deposition coating, the silicon layer and the mixed layer are thermal sprayed coatings formed by low pressure thermal spraying, and the oxide layer may be a thermal sprayed coating formed by air thermal spraying.

In the ceramic matrix composite component according to the present invention, the substrate may be formed of a ceramic matrix composite obtained by combining silicon carbide fibers with a silicon carbide matrix.

In the ceramic matrix composite component according to the present invention, the ceramic matrix composite component may be used in an environment in which a component surface temperature is 1200°C to 1400°C and in which water vapor partial pressure is 30 kPa to 140 kPa.

A ceramic matrix composite component manufacturing method according to the present invention is in the method of claim 9.

In the ceramic matrix composite component manufacturing method according to the present invention, in the silicon carbide layer deposition step, the silicon carbide layer may be deposited to a thickness of not less than 10 µm nor more than 50 µm; in the silicon layer deposition step, the silicon layer is deposited to a thickness of not less than 50 µm nor more than 140 µm; and, in the mixed layer deposition step, the mixed layer is deposited to a thickness of not less than 75 µm nor more than 225 µm.

In the ceramic matrix composite component manufacturing method according to the present invention, in the silicon layer deposition step, the silicon layer may be deposited to a thickness of not less than 50 µm nor more than 100 µm.

In the ceramic matrix composite component coated with environmental barrier coatings which has the above-described configuration and the method of manufacturing the same, by coating the surface of the substrate formed of a silicide-containing ceramic matrix composite with the silicon carbide layer, the silicon layer, the mixed layer made of a mixture of mullite and ytterbium silicate, and the oxide layer which are stacked in this order, the adhesion between the layers is improved, and the coefficients of thermal expansion of the layers are graded from the substrate toward the oxide layer to relieve cyclic thermal stresses caused by thermal cycles. Accordingly, even in the case where the ceramic matrix composite component is exposed to thermal cycles in a high-temperature gas environment containing water vapor, coating delamination is reduced, and oxidation resistance and water vapor resistance can be further improved.

### [Brief Description of Drawings]

Fig. 1 is a cross-sectional view showing the configuration of a ceramic matrix composite component coated with environmental barrier coatings in an embodiment of the present invention.
Fig. 2 is a flowchart showing a method of manufacturing the ceramic matrix composite component coated with environmental barrier coatings in the embodiment of the present invention.
Fig. 3 includes graphs showing thermal expansion characteristics of thermal sprayed coatings in the embodiment of the present invention.
Fig. 4 is a schematic diagram showing the configuration of a water vapor exposure tester in the embodiment of the present invention.
Fig. 5 includes photographs showing the appearances of specimens of Example 1 after a water vapor exposure test in the embodiment of the present invention.
Fig. 6 includes a photograph showing the appearance of a specimen of Example 2 after a water vapor exposure test in the embodiment of the present invention.
Fig. 7 is a view showing the outline of burner rig testing in the embodiment of the present invention.
Fig. 8 includes photographs showing results of a burner rig test of a specimen of Example 1 after 4000 cycles in the embodiment of the present invention.
Fig. 9 includes photographs showing results of a burner rig test of a specimen of Example 2 after 1000 cycles in the embodiment of the present invention.

### [Description of Embodiments]

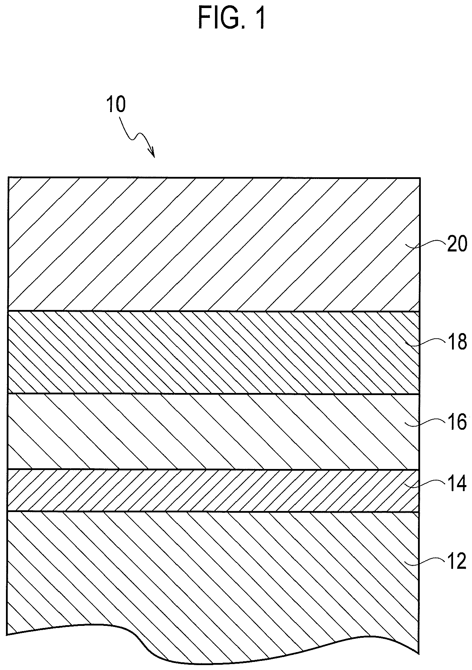

Hereinafter, an embodiment of the present invention will be described in detail with reference to the drawings. Fig. 1 is a cross-sectional view showing the configuration of a ceramic matrix composite component 10 coated with environmental barrier coatings. In the ceramic matrix composite component 10, a surface of a substrate 12 is coated with a silicon carbide layer 14, a silicon layer 16, a mixed layer 18 made of a mixture of mullite and ytterbium silicate, and an oxide layer 20 which are stacked in this order.

The substrate 12 is formed of a silicide-containing ceramic matrix composite. The ceramic matrix composite includes reinforcing fibers and a ceramic matrix.

The reinforcing fibers to be used are, for example, continuous fibers, discontinuous fibers, or whiskers of silicon carbide fibers (SiC fibers), silicon nitride fibers (Si₃N₄ fibers), carbon fibers, graphite fibers, or the like. A preform to be used is, for example, a fiber fabric having a three-dimensional structure obtained by bundling several hundreds to several thousands of filaments of the reinforcing fibers in fiber bundles and then weaving the fiber bundles in XYZ directions, a fabric having a two-dimensional structure such as a plain weave or satin weave fabric, a unidirectional material (UD material), or the like. Moreover, the ceramic matrix to be used is, for example, silicon carbide, silicon nitride, or the like.

At least either of the reinforcing fibers or the ceramic matrix is formed of silicide, and both of the reinforcing fibers and the ceramic matrix may be formed of silicide. Moreover, the reinforcing fibers and the ceramic matrix may be made of the same material or different materials. It should be noted that silicides include silicon as well as silicon-containing compounds such as silicon carbide and silicon nitride.

The ceramic matrix composite to be used is, for example, a SiC/SiC composite made of silicon carbide fibers and a silicon carbide matrix, a SiC/Si₃N₄ composite made of silicon carbide fibers and a silicon nitride matrix, a Si₃N₄/Si₃N₄ composite made of silicon nitride fibers and a silicon nitride matrix, or the like. It should be noted that the coefficient of thermal expansion of a SiC/SiC composite is in the range of 3.0×10⁻⁶/°C to 4.0×10⁻⁶/°C.

The silicon carbide layer 14 is deposited on the surface of the substrate 12. Since silicon carbide has excellent oxidation resistance, the oxidation resistance of the substrate 12 can be improved by coating the surface of the substrate 12 with the silicon carbide layer 14. Moreover, since the silicon carbide layer 14 has a high chemical affinity for the silicide-containing substrate 12, the adhesive strength between the substrate 12 and the silicon carbide layer 14 can be improved.

Further, in the case where the substrate 12 is formed of a SiC/SiC composite, the thermal expansion difference between the substrate 12 and the silicon carbide layer 14 is small. Accordingly, thermal stress is more relieved, and the occurrence of a fracture in the silicon carbide layer 14 is reduced. It should be noted that the coefficient of thermal expansion of silicon carbide is in the range of 3.0×10⁻⁶/°C to 4.0×10⁻⁶/°C.

The thickness of the silicon carbide layer 14 may be not less than 10 µm nor more than 50 µm, may be not less than 20 µm nor more than 40 µm. The reason for this is as follows: if the thickness of the silicon carbide layer 14 is smaller than 10 µm, the penetration of oxygen, water vapor, and the like increases, and oxidation resistance and water vapor resistance decrease; and, if the thickness of the silicon carbide layer 14 is larger than 50 µm, the occurrence of a fracture in the silicon carbide layer 14 is more probable because silicon carbide is a brittle material. Moreover, when the silicon carbide layer 14 has a thickness of not less than 20 µm nor more than 40 µm, the penetration of oxygen, water vapor, and the like is most reduced, and the occurrence of a fracture in the silicon carbide layer 14 can be most reduced.

The silicon carbide layer 14 may be formed of a chemical vapor deposition coating formed by chemical vapor deposition (CVD). Since a chemical vapor deposition coating is a denser coating than a thermal sprayed coating and the like, the penetration of oxygen, water vapor, and the like into the silicon carbide layer 14 is reduced, and the oxidation and the water vapor recession of the substrate 12 are more reduced.

The silicon layer 16 is deposited on the surface of the silicon carbide layer 14. The silicon layer 16 serves as a bond coat for improving the adhesion between the silicon carbide layer 14 made of non-oxide and the mixed layer 18 made of a mixture of mullite and ytterbium silicate which are oxides. Moreover, since the coefficient of thermal expansion of silicon is close to the coefficient of thermal expansion of silicon carbide, the occurrence of a fracture due to thermal stress caused by the thermal expansion difference between the silicon carbide layer 14 and the silicon layer 16 can be reduced. It should be noted that the coefficient of thermal expansion of silicon is in the range of 2.0×10⁻⁶/°C to 3.0×10⁻⁶/°C.

The thickness of the silicon layer 16 may be not less than 50 µm nor more than 140 µm, may be not less than 50 µm nor more than 100 µm, may be not less than 70 µm nor more than 80 µm.

The reason for this is as follows: if the thickness of the silicon layer 16 is smaller than 50 µm, the adhesion between the silicon carbide layer 14 and the mixed layer 18 decreases; and if the thickness of the silicon layer 16 is larger than 140 µm, a fracture may occur in the silicon layer 16 because silicon is a brittle material.

Moreover, when the silicon layer 16 has a thickness of not more than 100 µm, the occurrence of a fracture in the silicon layer 16 can be further reduced. Further, when the silicon layer 16 has a thickness of not less than 70 µm nor more than 80 µm, the adhesion between the silicon carbide layer 14 and the mixed layer 18 is most improved, and the occurrence of a fracture in the silicon layer 16 can be most reduced.

The silicon layer 16 may be formed of a thermal sprayed coating formed by low pressure thermal spraying. When the silicon layer 16 is a thermal sprayed coating formed by low pressure thermal spraying, the adhesion between the silicon layer 16 and the silicon carbide layer 14 can be made higher, and the penetration of oxygen and water vapor is reduced because a thermal sprayed coating formed by low pressure thermal spraying is a denser thermal sprayed coating than a thermal sprayed coating formed by air thermal spraying.

The mixed layer 18 made of a mixture of mullite and ytterbium silicate is deposited on the surface of the silicon layer 16. The mixed layer 18 improves the adhesion between the mixed layer 18 and the oxide layer 20, and serves as a stress relief layer for relieving thermal stress caused by the thermal expansion differences between both of the silicon carbide layer 14 and the silicon layer 16 and the oxide layer 20.

Mullite contained in the mixed layer 18 has the function of improving the adhesion between the mixed layer 18 and the oxide layer 20. Further, when mullite and ytterbium silicate are mixed, the coefficient of thermal expansion of a mixture of mullite and ytterbium silicate has an approximately intermediate value between the coefficients of thermal expansion of silicon carbide and silicon and the coefficient of thermal expansion of oxide (5.0×10⁻⁶/°C to 10.0×10⁻⁶/°C), and therefore thermal stress caused by the thermal expansion differences between both of the silicon carbide layer 14 and the silicon layer 16 and the oxide layer 20 is relieved. For example, the coefficient of thermal expansion of the mixed layer 18 made of a 1:1 (by volume) mixture of mullite and ytterbium silicate is in the range of 3.5×10⁻⁶/°C to 4.5×10⁻⁶/°C. Moreover, since ytterbium silicate has excellent water vapor resistance, the water vapor resistance of the mixed layer 18 can be made higher than that of mullite alone.

The ytterbium silicate to be used is, for example, ytterbium monosilicate (Yb₂SiO₅) or ytterbium disilicate (Yb₂Si₂O₇) . The mixed layer 18 is formed of a mixture of mullite (3Al₂O₃·2SiO₂) and ytterbium monosilicate (Yb₂SiO₅) or a mixture of mullite (3Al₂O₃·2SiO₂) and ytterbium disilicate (Yb₂Si₂O₇).

The thickness of the mixed layer 18 may be not less than 75 µm nor more than 225 µm, may be not less than 75 µm nor more than 150 µm.

The reason for this is as follows: if the thickness of the mixed layer 18 is smaller than 75 µm, the function thereof as a stress relief layer decreases due to the small thickness of the mixed layer 18; and if the thickness of the mixed layer 18 is larger than 225 µm, the occurrence of a fracture in the mixed layer 18 is more probable because mullite and ytterbium silicate, which constitute the mixed layer 18, are brittle materials. Moreover, when the mixed layer 18 has a thickness of not less than 75 µm nor more than 150 µm, the function thereof as a stress relief layer becomes highest, and the occurrence of a fracture in the mixed layer 18 can be most reduced.

The mixed layer 18 may be formed of a thermal sprayed coating formed by low pressure thermal spraying. When the mixed layer 18 is a thermal sprayed coating formed by low pressure thermal spraying, the adhesion between the mixed layer 18 and the silicon layer 16 can be made higher, and the penetration of oxygen and water vapor is reduced because a thermal sprayed coating formed by low pressure thermal spraying is a denser thermal sprayed coating than a thermal sprayed coating formed by air thermal spraying.

The oxide layer 20 is deposited on the surface of the mixed layer 18. In general, oxide is excellent in oxidation resistance, water vapor resistance, and low heat conductivity. Accordingly, the oxide layer 20 serves as a gas barrier layer against oxygen, water vapor, and the like, and also serves as a heat barrier layer against heat transmission from combustion gas and the like.

The oxide layer 20 may be formed of oxide mainly containing at least one selected from the group consisting of hafnium oxide (monoclinic HfO₂, cubic HfO₂, HfO₂ stabilized with yttria or the like, and the like), hafnium silicate (HfSiO₄ and the like), lutetium silicate (Lu₂SiO₅, Lu₂Si₂O₇, and the like), ytterbium silicate (Yb₂SiO₅, Yb₂Si₂O₇, and the like), titanium oxide (TiO₂ and the like), zirconium oxide (monoclinic ZrO₂, cubic ZrO₂, ZrO₂ stabilized with yttria or the like, and the like), aluminum titanate (Al₂TiO₅ and the like), aluminum silicate (Al₆Si₂O₁₃ and the like), and lutetium hafnium oxide (Lu₄Hf₃O₁₂ and the like). This is because these oxides are excellent in heat resistance, oxidation resistance, water vapor resistance, and low heat conductivity.

The oxide layer 20 may be formed of monoclinic hafnium oxide. This is because monoclinic hafnium oxide has more excellent water vapor resistance than lutetium silicate, ytterbium silicate, titanium oxide, aluminum titanate, and the like, and the coefficient of thermal expansion of monoclinic hafnium oxide is closer to the coefficients of thermal expansion of silicon carbide, silicon, and a mixture of mullite and ytterbium silicate than, for example, the coefficient of thermal expansion of hafnium oxide stabilized with yttria or the like is. It should be noted that the coefficient of thermal expansion of monoclinic hafnium oxide is in the range of 5.0×10⁻⁶/°C to 6.0×10⁻⁶/°C.

The thickness of the oxide layer 20 may be not less than 10 µm nor more than 300 µm, may be not less than 100 µm nor more than 200 µm.

The reason for this is as follows: if the thickness of the oxide layer 20 is smaller than 10 µm, the penetration of oxygen, water vapor, and the like increases, and oxidation resistance and water vapor resistance decrease; and, if the thickness of the oxide layer 20 is larger than 300 µm, the occurrence of a fracture in the oxide layer 20 is more probable because oxide is a brittle material. When the oxide layer 20 has a thickness of not less than 100 µm nor more than 200 µm, oxidation resistance and water vapor resistance are most improved, and the occurrence of a fracture in the oxide layer 20 can be most reduced.

The oxide layer 20 may be a thermal sprayed coating formed by air thermal spraying. A thermal sprayed coating formed by air thermal spraying has more pores than a thermal sprayed coating formed by low pressure thermal spraying. Accordingly, when the ceramic matrix composite component 10 is exposed to heat, the sintering of oxide particles constituting the thermal sprayed coating is reduced. Thus, the occurrence of a fracture in the oxide layer 20 can be reduced.

Next, a method of manufacturing the ceramic matrix composite component 10 coated with environmental barrier coatings will be described.

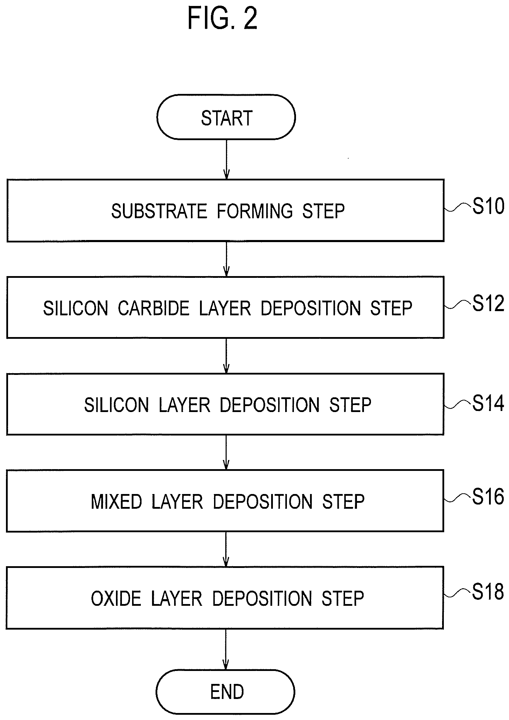

Fig. 2 is a flowchart showing a method of manufacturing the ceramic matrix composite component 10 coated with environmental barrier coatings. The method of manufacturing the ceramic matrix composite component 10 coated with environmental barrier coatings includes a substrate forming step (S10), a silicon carbide layer deposition step (S12), a silicon layer deposition step (S14), a mixed layer deposition step (S16), and an oxide layer deposition step (S18).

The substrate forming step (S10) is the step of forming the substrate 12 of a silicide-containing ceramic matrix composite.

The substrate 12 can be formed by a general method of forming a ceramic matrix composite. For example, the substrate 12 is formed by forming silicon carbide fibers or the like into a preform such as a three-dimensional fabric and then infiltrating the preform with a ceramic matrix such as silicon carbide by chemical vapor deposition (CVD) or CVI (Chemical Vapor Infiltration) to combine the preform with the ceramic matrix. The silicon carbide fibers to be used are, for example, TYRANNO FIBER (manufactured by Ube Industries, Ltd.), HI-NICALON FIBER (manufactured by Nippon Carbon Co., Ltd.), or the like.

Instead, the substrate 12 may be formed by infiltrating the preform with organometallic polymers (precursors of a ceramic matrix) such as polycarbosilane and then firing the preform in an inert atmosphere.

Another method of forming the substrate 12 may be used in which the substrate 12 is formed by preparing a mixture of reinforcing fibers such as silicon carbide fibers and raw material powders (e.g., silicon powder and carbon powder) for forming a ceramic matrix of silicon carbide or the like and then combining the reinforcing fibers and raw material powders by reaction sintering using a hot press or a hot isostatic press (HIP) .

Moreover, the ceramic matrix composite may be infiltrated with a slurry containing silicon carbide powder or the like dispersed in an organic solvent such as ethanol to fill pores in the surface of the ceramic matrix composite with silicon carbide powder or the like and smooth the surface of the substrate.

The silicon carbide layer deposition step (S12) is the step of depositing the silicon carbide layer 14 on the surface of the substrate 12.

The silicon carbide layer 14 can be formed by thermal spraying, physical vapor deposition (PVD) such as sputtering and ion plating, chemical vapor deposition (CVD), and the like, but may be formed by chemical vapor deposition because chemical vapor deposition can form a denser coating than thermal spraying and the like.

In the case where the silicon carbide layer 14 is formed by chemical vapor deposition, general chemical vapor deposition for silicon carbide can be used. For example, the silicon carbide layer 14 can be formed on the surface of the substrate 12 by setting and heating the substrate 12 in a reaction chamber and introducing methyltrichlorosilane (CH₃SiCl₃) or the like as reactant gas into the reaction chamber.

The silicon layer deposition step (S14) is the step of depositing the silicon layer 16 on the surface of the silicon carbide layer 14.

The silicon layer 16 can be formed by thermal spraying, physical vapor deposition (PVD), chemical vapor deposition (CVD), and the like, but thermal spraying (air thermal spraying or low pressure thermal spraying) can form a coating having good adhesion. The thermal spraying to be used is general plasma spraying or the like.

With regard to the thermal spraying to be used, low pressure thermal spraying can cause less oxidation of the silicon carbide layer 14 and less oxidation of silicon powder as thermal spraying material and can form a denser thermal sprayed coating than air thermal spraying. For example, procedures for forming the silicon layer 16 by low pressure thermal spraying are as follows: the substrate 12 coated with the silicon carbide layer 14 is set in a thermal spraying chamber, and the thermal spraying chamber is evacuated to a vacuum; then, in a vacuum state or in a state obtained by introducing inert gas such as argon gas and reducing the pressure, silicon powder is fed to a thermal spray gun; and thermal spraying is performed on the surface of the silicon carbide layer 14. The thermal spraying material to be used is, for example, silicon powder having grain sizes of 10 µm to 40 µm.

The mixed layer deposition step (S16) is the step of depositing the mixed layer 18 made of a mixture of mullite and ytterbium silicate on the surface of the silicon layer 16.

The mixed layer 18 can be formed by thermal spraying, physical vapor deposition (PVD), chemical vapor deposition (CVD), and the like, but thermal spraying (air thermal spraying or low pressure thermal spraying) can form a coating having good adhesion. With regard to the thermal spraying to be used, low pressure thermal spraying can cause less oxidation of the silicon layer 16 and can form a denser thermal sprayed coating than air thermal spraying.

In the case where the mixed layer 18 is formed by low pressure thermal spraying, mixed powder obtained by mixing mullite powder and ytterbium silicate powder in advance may be used as thermal spraying material, the mixed powder being fed to a thermal spray gun and thermal sprayed onto the surface of the silicon layer 16 in a vacuum or reduced-pressure state; or mullite powder and ytterbium silicate powder may be separately fed to a thermal spray gun to be mixed in a melted or near-melted state and thermal sprayed in a vacuum or reduced-pressure state. The thermal spraying materials to be used are, for example, mullite powder and ytterbium silicate powder having grain sizes of 10 µm to 50 µm.

The oxide layer deposition step (S18) is the step of depositing the oxide layer 20 on the surface of the mixed layer 18.

The oxide layer 20 can be formed by thermal spraying, physical vapor deposition (PVD), chemical vapor deposition (CVD), and the like, but thermal spraying (air thermal spraying or low pressure thermal spraying) can form a coating having good adhesion. With regard to the thermal spraying to be used, air thermal spraying can cause less sintering of oxide particles constituting the thermal sprayed coating.

For example, procedures for forming the oxide layer 20 by air thermal spraying are as follows: the substrate 12 having the surface thereof coated with the mixed layer 18 is set in a thermal spraying chamber; oxide powder as thermal spraying material is fed to a thermal spray gun; and thermal spraying is performed on the surface of the mixed layer 18 in an atmospheric-pressure state. The thermal spraying material to be used is, for example, oxide powder having grain sizes 10 µm to 50 µm. Thus, the manufacturing of the ceramic matrix composite component 10 coated with environmental barrier coatings is completed.

In the above-described configuration, by coating the surface of the substrate formed of the silicide-containing ceramic matrix composite with the silicon carbide layer, the silicon layer, the mixed layer made of a mixture of mullite and ytterbium silicate, and the oxide layer which are stacked in this order, the adhesive strength between the layers are improved, and the respective coefficients of thermal expansion of the layers are graded from the substrate toward the oxide layer to relieve cyclic thermal stresses caused by thermal cycles. Accordingly, even in the case where the ceramic matrix composite component is exposed to thermal cycles in a high-temperature gas environment containing water vapor, coating delamination is reduced, and oxidation resistance and water vapor resistance can be more improved.

Moreover, by adjusting the thickness of each layer such that the thickness of the silicon carbide layer is not less than 10 µm nor more than 50 µm, the thickness of the silicon layer is not less than 50 µm nor more than 140 µm, and the thickness of the mixed layer is not less than 75 µm nor more than 225 µm, coating delamination is reduced, and oxidation resistance and water vapor resistance can be more improved even in the case where the ceramic matrix composite component is exposed to a high-temperature environment containing water vapor (surface temperature 1300°C, water vapor partial pressure 150 kPa) for 100 hours, or even in the case where the ceramic matrix composite component is exposed to 1000 thermal cycles (surface temperature ranges from below 600°C to 1300°C).

Further, by adjusting the thickness of each layer such that the thickness of the silicon carbide layer is not less than 10 µm nor more than 50 µm, the thickness of the silicon layer is not less than 50 µm nor more than 100 µm, and the thickness of the mixed layer is not less than 75 µm nor more than 225 µm, coating delamination and fracture are reduced, and oxidation resistance and water vapor resistance can be further improved even in the case where the ceramic matrix composite component is exposed to a high-temperature environment containing water vapor (surface temperature 1300°C, water vapor partial pressure 150 kPa) for 800 hours, or even in the case where the ceramic matrix composite component is exposed to 4000 thermal cycles (surface temperature ranges from below 600°C to 1300°C).

### [Examples]

Specimens coated with environmental barrier coatings were prepared, and water vapor exposure tests and burner rig tests were conducted to evaluate water vapor characteristics and thermal cycle characteristics.

### (Specimen Preparation)

First, methods of preparing specimens of Examples 1 and 2 will be described. It should be noted that the specimens of Examples 1 and 2 have the same configuration, except for the thickness of the Si layer.

Substrates of the specimens of Examples 1 and 2 were formed of a SiC/SiC composite obtained by combining SiC fibers and a SiC matrix. The SiC/SiC composite was formed by infiltrating a preform formed of SiC fibers with silicon powder and carbon powder and forming a SiC matrix by reaction sintering to obtain a composite material. As the SiC fibers, TYRANNO FIBER (manufactured by Ube Industries, Ltd.) was used. Moreover, the SiC/SiC composite was infiltrated with a slurry containing silicon carbide powder dispersed in ethanol to fill pores in the surface of the SiC/SiC composite with silicon carbide powder and smooth the surface of the substrate. For water vapor exposure tests, the substrate had a tapered flat shape of 50 mm × 9 mm × 4 mmt or a flat shape of 50 mm × 35 mm × 4 mmt having edges rounded with a radius of 1.5 mm. For burner rig tests, the substrate had a flat shape of 50 mm × 50 mm × 4 mmt.

Next, a SiC layer was deposited on the surface of the substrate by CVD. The substrate was set in a reaction chamber and heated (reaction temperature was 900°C to 1000°C), and methyltrichlorosilane (CH₃SiCl₃) was used as reactant gas. Thus, the surface of the substrate was coated with a SiC layer. The thickness of the SiC layer was 30 µm in the specimens of both of Examples 1 and 2.

Next, a Si layer was deposited on the surface of the SiC layer by low pressure thermal spraying. The substrate coated with the SiC layer was set in a thermal spraying chamber, and the thermal spraying chamber was evacuated to a vacuum. Then, argon gas was introduced into the thermal spraying chamber, and melted Si powder was thermal sprayed onto the surface of the SiC layer in a state in which the pressure in the thermal spraying chamber was reduced. The grain sizes of the Si powder used were 20 µm to 40 µm. The thickness of the Si layer was 75 µm in the specimens of Example 1 and 140 µm in the specimens of Example 2. It should be noted that the thickness of the Si layer was adjusted by changing thermal spraying time.

Next, a mixed layer of 3Al₂O₃·2SiO₂ and Yb₂SiO₅ was deposited on the surface of the Si layer by low pressure thermal spraying. In the low pressure thermal spraying, mixed powder (powder having a mixing ratio adjusted so that the volume ratio after the formation of the thermal sprayed coating may be 1:1) of 3Al₂O₃·2SiO₂ powder and Yb₂SiO₅ powder was used as thermal spraying material, and the mixed powder melted was thermal sprayed onto the surface of the Si layer in a state in which the pressure in the thermal spraying chamber containing argon gas was reduced. The thickness of the mixed layer of 3Al₂O₃·2SiO₂ and Yb₂SiO₅ was 75 µm in the specimens of both of Examples 1 and 2.

Next, a HfO₂ layer was deposited on the surface of the mixed layer of 3Al₂O₃ -2SiO₂ and Yb₂SiO₅ by air thermal spraying. Powder of HfO₂ was fed to a thermal spray gun, and the HfO₂ powder melted was thermal sprayed onto the surface of the mixed layer of 3Al₂O₃·2SiO₂ and Yb₂SiO₅ in an atmospheric-pressure state. The HfO₂ powder used was monoclinic HfO₂ powder. The thickness of the HfO₂ layer was 150 µm in the specimens of both of Examples 1 and 2.

In the above-described specimens of Examples 1 and 2, after the deposition of the HfO₂ layers, visual inspection was performed, and fracture and delamination were not observed in the coatings.

### (Thermal Expansion Measurement)

Test pieces simulating a Si layer, a mixed layer of 3Al₂O₃·2SiO₂ and Yb₂SiO₅, and a HfO₂ layer were prepared, and thermal expansion measurement was conducted in the temperature range of room temperature to 1200°C.

A test piece simulating a Si layer was prepared by low pressure thermal spraying using Si powder as thermal spraying material, and thermal expansion measurement was conducted in accordance with the measurement method defined in JIS Z2285. As a result, the coefficient of thermal expansion of the test piece simulating a Si layer was in the range of 2.0×10⁻⁶/°C to 2.5×10⁻⁶/°C.

A test piece simulating a mixed layer of 3Al₂O₃·2SiO₂ and Yb₂SiO₅ was prepared by low pressure thermal spraying using mixed powder (powder having a mixing ratio adjusted so that the volume ratio after the formation of the thermal sprayed coating may be 1:1) of 3Al₂O₃·2SiO₂ powder and Yb₂SiO₅ powder as thermal spraying material, and thermal expansion measurement was conducted. Moreover, for the sake of comparison, a test piece was prepared using 3Al₂O₃·2SiO₂ powder as thermal spraying material, and thermal expansion measurement was conducted.

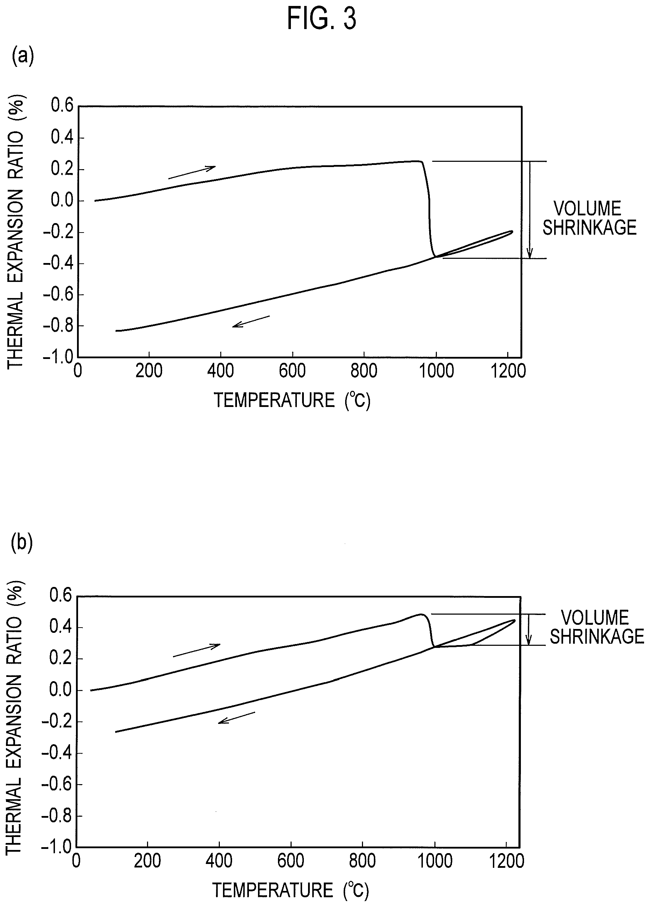

Fig. 3 includes graphs showing thermal expansion characteristics of thermal sprayed coatings. Fig. 3(a) is a graph showing thermal expansion characteristics of the thermal sprayed coating made of 3Al₂O₃·2SiO₂, and Fig. 3(b) is a graph showing thermal expansion characteristics of the thermal sprayed coating made of a mixture of 3Al₂O₃·2SiO₂ and Yb₂SiO₅.

As shown in Fig. 3 (a), in the case of the thermal sprayed coating made of 3Al₂O₃·2SiO₂, at temperatures above 900°C, volume shrinkage occurs due to the sintering of 3Al₂O₃·2SiO₂ particles constituting the thermal sprayed coating, and the thermal expansion ratio significantly decreases.

On the other hand, as shown in Fig. 3(b), in the case of the thermal sprayed coating made of a mixture of 3Al₂O₃·2SiO₂ and Yb₂SiO₅, at temperatures above 900°C, the volume shrinkage caused by the sintering of 3Al₂O₃·2SiO₂ particles in the thermal sprayed coating is reduced, and the decrease in the thermal expansion ratio is reduced.

As described above, with a mixed layer made of a mixture of mullite and ytterbium silicate, the great decrease in the thermal expansion ratio can be made smaller than that of mullite alone at temperatures above 900°C. The coefficient of thermal expansion of the test piece simulating a mixed layer of 3Al₂O₃·2SiO₂ and Yb₂SiO₅ was in the range of 3.5×10⁻⁶/°C to 4.5×10⁻⁶/°C.

A test piece simulating a HfO₂ layer was prepared by air thermal spraying using monoclinic HfO₂ powder as thermal spraying material, and thermal expansion measurement was conducted. As a result, the coefficient of thermal expansion of the test piece simulating a HfO₂ layer was in the range of 5.0×10⁻⁶/°C to 6.0×10⁻⁶/°C.

As described above, in each of the specimens of Examples 1 and 2, the coefficient of thermal expansion of the mixed layer made of a mixture of 3Al₂O₃ ·2SiO₂ and Yb₂SiO₅ has an intermediate value between the coefficient of thermal expansion of the Si layer and the coefficient of thermal expansion of the HfO₂ layer.

### (Water Vapor Exposure Test)

Water vapor exposure tests were conducted on specimens of Examples 1 and 2. Moreover, as specimens of a comparative example, a water vapor exposure test was conducted on a substrate with no environmental barrier coatings (substrate alone which is formed of a SiC/SiC composite).

First, a method for conducting a water vapor exposure test will be described. For water vapor exposure testing, a water vapor exposure tester fabricated by Toshin Kogyo Co., Ltd. was used. Specifications of this water vapor exposure tester are as follows: the maximum temperature is 1500°C (working temperature 1400°C), and the maximum pressure in a test chamber is 950 kPa (9.5 atm).

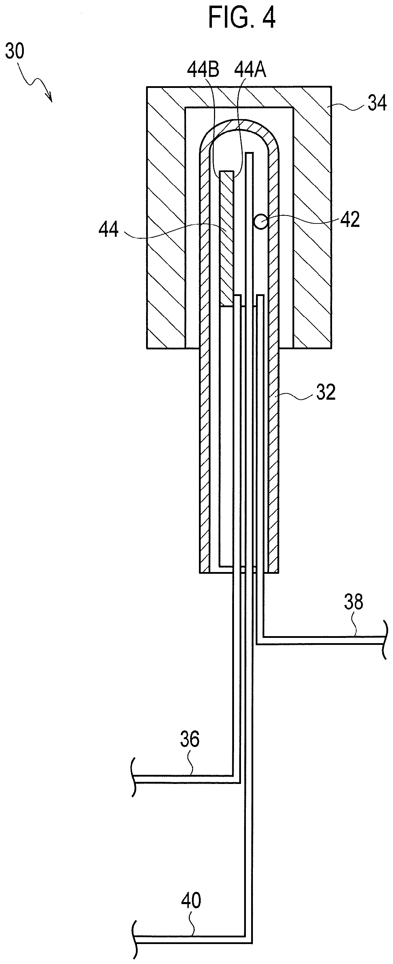

Fig. 4 is a schematic diagram showing the configuration of a water vapor exposure tester 30. Around a test chamber 32 made of alumina, a heater 34 made of MoSi₂ is provided. In the test chamber 32, the following components are provided: a water vapor feed pipe 36 for feeding water vapor, an atmospheric gas feed pipe 38 for feeding atmospheric gas (air, nitrogen, oxygen, or carbon dioxide gas), a mixed gas discharge pipe 40 for discharging mixed gas from the test chamber, and a thermocouple 42 for temperature control. Moreover, a specimen 44 is placed in the test chamber 32 such that water vapor fed from the water vapor feed pipe 36 flows along the surface of the specimen.

Test conditions for water vapor exposure testing were as follows: test temperature was 1300°C, the total pressure in the test chamber was 950 kPa (9.5 atm), the partial pressure of water vapor was 150 kPa (1.5 atm), and the partial pressure of atmospheric gas (O₂+N₂+CO₂) was 800 kPa (8 atm). Water vapor exposure test evaluation was performed by visual inspection.

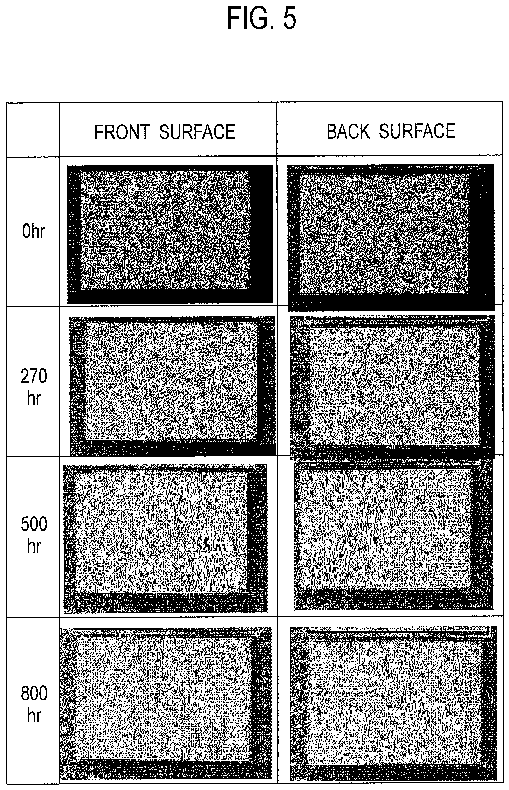

Fig. 5 includes photographs showing the appearances of the specimens of Example 1 subjected to a water vapor exposure test. Visual inspections were performed after 270 hours, 500 hours, and 800 hours of water vapor exposure. In the specimens of Example 1, even after 800 hours of water vapor exposure, fracture and delamination were not observed in the coatings. It should be noted that with regard to front and back surfaces of a specimen, the surface of the specimen facing the water vapor feed pipe was regarded as the front surface (specimen surface 44A in Fig. 4), and the surface of the specimen opposite to the front surface was regarded as the back surface (specimen surface 44B in Fig. 4).

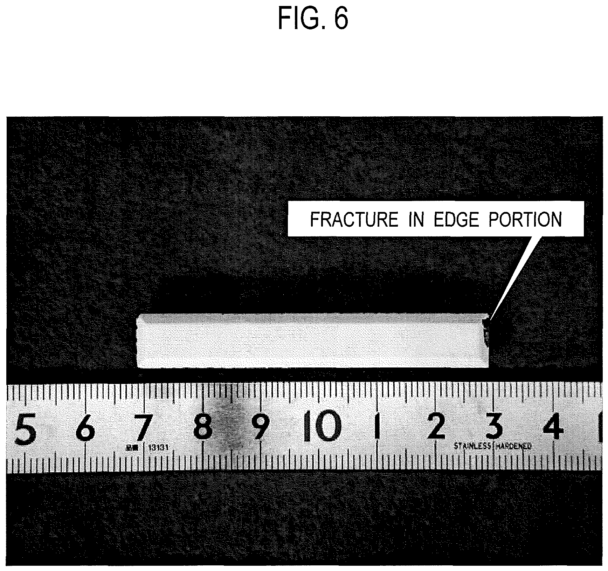

Fig. 6 includes a photograph showing the appearance of the specimen of Example 2 subjected to a water vapor exposure test. In the specimen of Example 2, after 100 hours of water vapor exposure, slight fracture was observed in an edge portion, but coating delamination did not occur.

It should be noted that the specimen of the comparative example was corroded by water vapor exposure after 60 hours of water vapor exposure, to such an extent that the shape thereof was not maintained.

### (Burner Rig Test)

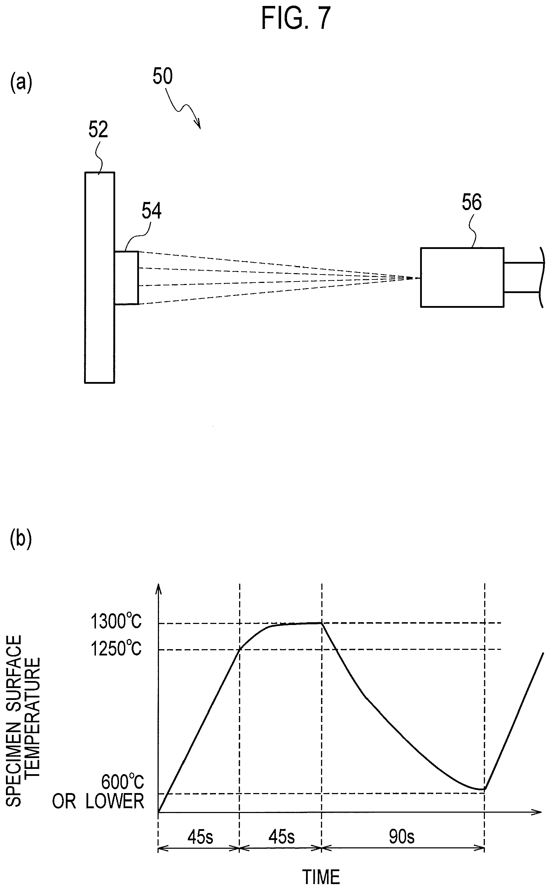

Burner rig tests were conducted on the specimens of Examples 1 and 2. First, a method for conducting a burner rig test will be described. Fig. 7 is a view showing the outline of burner rig testing. Fig. 7(a) is a schematic diagram schematically showing the configuration of a burner rig tester 50, and Fig. 7 (b) is a view showing specimen surface temperature cycle conditions for one cycle.

As shown in Fig. 7 (a), a burner rig test is conducted with a specimen 54 held on a holder 52 and with flame from a nozzle 56 pointed at a specimen surface. The surface temperature of the specimen 54 is measured with a radiation thermometer (not shown). The position at which the surface temperature of the specimen 54 is measured with the radiation thermometer is in a central portion of the specimen 54. With regard to the calibration of specimen surface temperature by the radiation thermometer, blackbody paint was applied to the specimen 54 in advance, and the emissivity of the specimen 54 was adjusted. Moreover, a camera capable of taking photographs of the coating surface is installed so that the coating surface can be photographed and observed during thermal cycles.

The specimen 54 was set on the holder 52 and subjected to thermal cycles. Each cycle consists of 45-second heating (from below 600°C to 1250°C), 45-second holding (from 1250°C to 1300°C), and 90-second cooling (from 1300°C to below 600°C) as shown in Fig. 7(b).

Burner rig test evaluation was performed by visual inspection and cross-section observation. It should be noted that in cross-section observation, a sample cut out of a specimen after a burner rig test was embedded in embedding resin, then polished, and observed with an optical microscope.

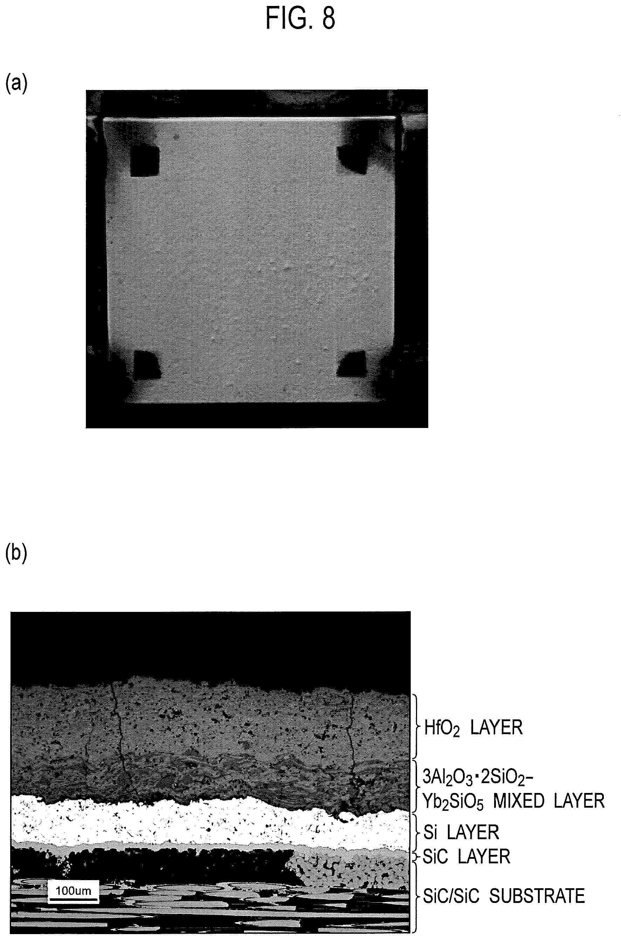

Fig. 8 includes photographs showing burner rig test results of a specimen of Example 1 after 4000 cycles. Fig. 8 (a) is a photograph showing a result of visual inspection, and Fig. 8(b) is a photograph showing a result of cross-section observation.

In the specimen of Example 1, as can be seen from the result of visual inspection shown in Fig. 8(a), fracture and delamination were not observed in the coatings even after 4000 cycles. Moreover, as can be seen from the result of cross-section observation shown in Fig. 8(b), microcracks were observed in the HfO₂ layer and the mixed layer of 3Al₂O₃·2SiO₂ and Yb₂SiO₅ in the thickness direction, but the occurrence of microcracks was not observed in the Si layer and the SiC layer. It should be noted that in the photograph in Fig. 8(a) showing the result of visual inspection, black portions of the specimen surface are portions to which blackbody paint was applied.

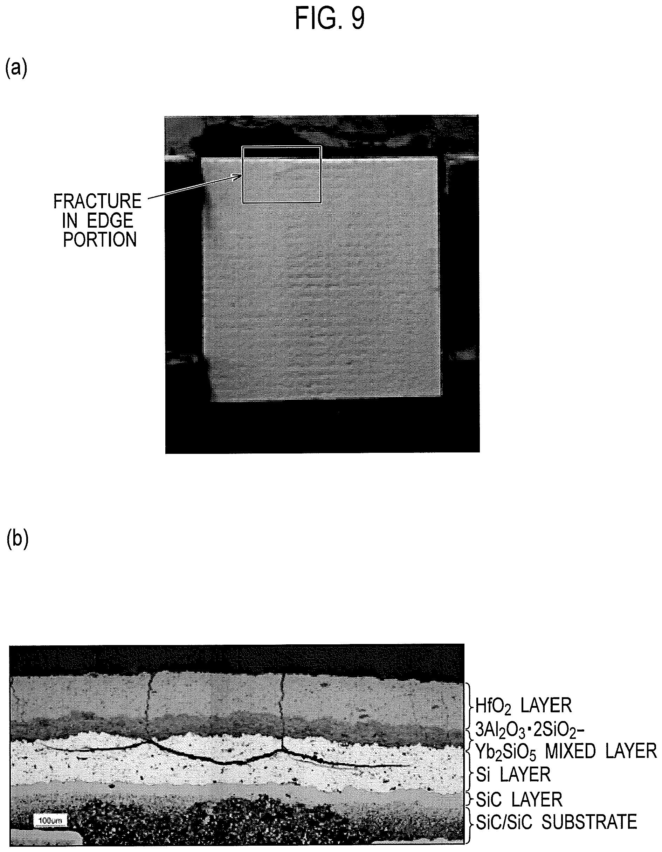

Fig. 9 includes photographs showing burner rig test results of a specimen of Example 2 after 1000 cycles. Fig. 9 (a) is a photograph showing a result of visual inspection, and Fig. 9(b) is a photograph showing a result of cross-section observation.

In the specimen of Example 2, as can be seen from the result of visual inspection shown in Fig. 9(a), slight fracture was observed in coatings in an edge portion after 1000 cycles, but coating delamination did not occur. As can be seen from the result of cross-section observation shown in Fig. 9(b), microcracks were observed in the HfO₂ layer and the mixed layer of 3Al₂O₃·2SiO₂ and Yb₂SiO₅ in the thickness direction, and the occurrence of a microcrack was observed in the Si layer in a horizontal direction (in-plane direction). Moreover, the occurrence of a microcrack was not observed in the SiC layer.

### [Industrial Applicability]

In the present invention, even in the case where the ceramic matrix composite component is exposed to thermal cycles in a high-temperature gas environment containing water vapor, coating delamination is reduced, and oxidation resistance and water vapor resistance can be improved. Accordingly, the present invention is useful in high-temperature components of jet engines, rocket engines, and the like.

## Claims

1. A ceramic matrix composite component coated with environmental barrier coatings, comprising:
a substrate formed of a ceramic matrix composite;
a silicon carbide layer deposited on a surface of the substrate;
a silicon layer deposited on a surface of the silicon carbide layer;
a mixed layer made of a mixture of mullite and ytterbium silicate and deposited on a surface of the silicon layer; and
an oxide layer deposited on a surface of the mixed layer, wherein
reinforcing fibers and/or a ceramic matrix in the ceramic matrix composite is/are formed of silicon or a silicon-containing compound, and
the oxide layer is formed of oxide mainly containing at least one selected from the group consisting of hafnium oxide, hafnium silicate, lutetium silicate, ytterbium silicate, titanium oxide, zirconium oxide, aluminum titanate, aluminum silicate, and lutetium hafnium oxide.

2. The ceramic matrix composite component according to claim 1, wherein the ytterbium silicate is any one of Yb₂SiO₅ and Yb₂Si₂O₇.

3. The ceramic matrix composite component according to any one of claims 1 and 2, wherein
the silicon carbide layer has a thickness of not less than 10 µm nor more than 50 µm,
the silicon layer has a thickness of not less than 50 µm nor more than 140 µm, and
the mixed layer has a thickness of not less than 75 µm nor more than 225 µm.

4. The ceramic matrix composite component according to claim 3, wherein the silicon layer has a thickness of not less than 50 µm nor more than 100 µm.

5. The ceramic matrix composite component according to claim 1, wherein the oxide layer is formed of monoclinic hafnium oxide.

6. The ceramic matrix composite component according to any one of claims 1 and 2, wherein
the silicon carbide layer is a chemical vapor deposition coating,
the silicon layer and the mixed layer are thermal sprayed coatings formed by low pressure thermal spraying, and
the oxide layer is a thermal sprayed coating formed by air thermal spraying.

7. The ceramic matrix composite component according to any one of claims 1 and 2, wherein the substrate is formed of a ceramic matrix composite obtained by combining silicon carbide fibers with a silicon carbide matrix.

8. Use of the ceramic matrix composite component according to any one of claims 1 and 2, wherein the ceramic matrix composite component is used in an environment in which a component surface temperature is 1200°C to 1400°C and in which water vapor partial pressure is 30 kPa to 140 kPa.

9. A method of manufacturing a ceramic matrix composite component coated with environmental barrier coatings, comprising:
a substrate forming step of forming a substrate of a ceramic matrix composite;
a silicon carbide layer deposition step of depositing a silicon carbide layer on a surface of the substrate by chemical vapor deposition;
a silicon layer deposition step of depositing a silicon layer on a surface of the silicon carbide layer by low pressure thermal spraying;
a mixed layer deposition step of depositing a mixed layer made of a mixture of mullite and ytterbium silicate on a surface of the silicon layer by low pressure thermal spraying; and
an oxide layer deposition step of depositing an oxide layer on a surface of the mixed layer by air thermal spraying; wherein
reinforcing fibers and/or a ceramic matrix in the ceramic matrix composite is/are formed of silicon or silicon-containing compound, and
the oxide layer is formed of oxide mainly containing at least one selected from the group consisting of hafnium oxide, hafnium silicate, lutetium silicate, ytterbium silicate, titanium oxide, zirconium oxide, aluminum titanate, aluminum silicate, and lutetium hafnium oxide.

10. The method according to claim 9, wherein
in the silicon carbide layer deposition step, the silicon carbide layer is deposited to a thickness of not less than 10 µm nor more than 50 µm,
in the silicon layer deposition step, the silicon layer is deposited to a thickness of not less than 50 µm nor more than 140 µm, and
in the mixed layer deposition step, the mixed layer is deposited to a thickness of not less than 75 µm nor more than 225 µm.

11. The method according to claim 10, wherein in the silicon layer deposition step, the silicon layer is deposited to a thickness of not less than 50 µm nor more than 100 µm.

## Patentansprüche

1. Keramikmatrixverbundstoffkomponente, beschichtet mit Umgebungsbarrierenbeschichtungen, umfassend:
ein Substrat, gebildet auf einem Keramikmatrixverbundstoff;
eine Siliciumcarbidschicht, abgelagert auf einer Oberfläche des Substrats;
eine Siliciumschicht, abgelagert auf einer Oberfläche der Siliciumcarbidschicht;
eine gemischte Schicht, hergestellt aus einer Mischung von Mullit und Ytterbiumsilicat und abgelagert auf einer Oberfläche der Siliciumschicht; und
eine Oxidschicht, abgelagert auf einer Oberfläche der gemischten Schicht, wobei
Verstärkungsfasern und/oder eine Keramikmatrix in dem Keramikmatrixverbundstoff aus Silicium oder einer Silicium enthaltenden Verbindung gebildet werden und
die Oxidschicht aus Oxid gebildet wird, hauptsächlich enthaltend mindestens eines, ausgewählt aus der Gruppe, bestehend aus Hafniumoxid, Hafniumsilicat, Lutetiumsilicat, Ytterbiumsilicat, Titanoxid, Zirconiumoxid, Aluminiumtitanat, Aluminiumsilicat und Lutetiumhafniumoxid.

2. Keramikmatrixverbundstoffkomponente nach Anspruch 1, wobei das Ytterbiumsilicat eines von Yb₂SiO₅ und Yb₂Si₂O₇ ist.

3. Keramikmatrixverbundstoffkomponente nach einem der Ansprüche 1 und 2, wobei
die Siliciumcarbidschicht eine Dicke von nicht weniger als 10 µm und nicht mehr als 50 µm aufweist,
die Siliciumschicht eine Dicke von nicht weniger als 50 µm und nicht mehr als 140 µm aufweist, und
die gemischte Schicht eine Dicke von nicht weniger als 75 µm und nicht mehr als 225 µm aufweist.

4. Keramikmatrixverbundstoffkomponente nach Anspruch 3, wobei die Siliciumschicht eine Dicke von nicht weniger als 50 µm und nicht mehr als 100 µm aufweist.

5. Keramikmatrixverbundstoffkomponente nach Anspruch 1, wobei die Oxidschicht aus monoklinem Hafniumoxid gebildet ist.

6. Keramikmatrixverbundstoffkomponente nach einem der Ansprüche 1 und 2, wobei
die Siliciumcarbidschicht eine chemische Aufdampfungsschicht ist,
die Siliciumschicht und die gemischte Schicht thermisch gespritzte Schichten sind, gebildet durch thermisches Spritzen bei niedrigem Druck, und
die Oxidschicht eine thermisch gespritzte Schicht ist, gebildet durch thermisches Luftspritzen.

7. Keramikmatrixverbundstoffkomponente nach einem der Ansprüche 1 und 2, wobei das Substrat aus einem Keramikmatrixverbundstoff gebildet wird, erhalten durch Kombinieren von Siliciumcarbidfasern mit einer Siliciumcarbidmatrix.

8. Verwendung der Keramikmatrixverbundstoffkomponente nach einem der Ansprüche 1 und 2, wobei die Keramikmatrixverbundstoffkomponente in einer Umgebung verwendet wird, in der eine Komponentenoberflächentemperatur 1200 °C bis 1400 °C beträgt und in der der Wasserdampfpartialdruck 30 kPa bis 140 kPa beträgt.

9. Verfahren zum Herstellen einer mit Umgebungsbarrierenbeschichtungen beschichteten Keramikmatrixverbundstoffkomponente, umfassend:
einen Substratbildungsschritt zum Bilden eines Substrats eines Keramikmatrixverbundstoffs;
einen Siliciumcarbidschicht-Ablagerungsschritt zum Ablagern einer Siliciumcarbidschicht auf einer Oberfläche des Substrats durch chemische Aufdampfung;
einen Siliciumschicht-Ablagerungsschritt zum Ablagern einer Siliciumschicht auf einer Oberfläche der Siliciumcarbidschicht durch thermisches Spritzen bei niedrigem Druck;
einen Mischschicht-Ablagerungsschritt zum Ablagern einer gemischten Schicht, hergestellt aus einer Mischung von Mullit und Ytterbiumsilicat, auf einer Oberfläche der Siliciumschicht durch thermisches Spritzen bei niedrigem Druck; und
einen Oxidschicht-Ablagerungsschritt zum Ablagern einer Oxidschicht auf einer Oberfläche der gemischten Schicht durch thermisches Luftspritzen; wobei
Verstärkungsfasern und/oder eine Keramikmatrix in dem Keramikmatrixverbundstoff aus Silicium oder einer Silicium enthaltenden Verbindung gebildet werden und
die Oxidschicht aus Oxid gebildet wird, hauptsächlich enthaltend mindestens eines, ausgewählt aus der Gruppe, bestehend aus Hafniumoxid, Hafniumsilicat, Lutetiumsilicat, Ytterbiumsilicat, Titanoxid, Zirconiumoxid, Aluminiumtitanat, Aluminiumsilicat und Lutetiumhafniumoxid.

10. Verfahren nach Anspruch 9, wobei
in dem Siliciumcarbidschicht-Ablagerungsschritt die Siliciumcarbidschicht auf eine Dicke von nicht weniger als 10 µm und nicht mehr als 50 µm abgelagert wird,
in dem Siliciumschicht-Ablagerungsschritt die Siliciumschicht auf eine Dicke von nicht weniger als 50 µm und nicht mehr als 140 µm abgelagert wird und
in dem Mischschicht-Ablagerungsschritt die gemischte Schicht auf eine Dicke von nicht weniger als 75 µm und nicht mehr als 225 µm abgelagert wird.

11. Verfahren nach Anspruch 10, wobei in dem Siliciumschicht-Ablagerungsschritt die Siliciumschicht auf eine Dicke von nicht weniger als 50 µm und nicht mehr als 100 µm abgelagert wird.

## Revendications

1. Composant composite de matrice de céramique revêtu de revêtements formant barrière environnementale, comprenant :
un substrat formé d'un composite de matrice de céramique ;
une couche de carbure de silicium déposée sur une surface du substrat ;
une couche de silicium déposée sur une surface de la couche de carbure de silicium
une couche mixte réalisée en un mélange de mullite et de silicate d'ytterbium et déposée sur une surface de la couche de silicium ; et
une couche d'oxyde déposée sur une surface de la couche mixte, dans lequel
des fibres de renfort et/ou une matrice en céramique dans le composite de matrice de céramique est/sont formées de silicium ou d'un composé contenant du silicium, et
la couche d'oxyde est constituée d'oxyde contenant essentiellement au moins un élément sélectionné dans le groupe constitué d'oxyde d'hafnium, de silicate d'hafnium, de silicate de lutétium, de silicate d'ytterbium, d'oxyde de titane, d'oxyde de zirconium, de titanate d'aluminium, de silicate d'aluminium et d'oxyde de lutétium-hafnium.

2. Composant composite de matrice de céramique selon la revendication 1, dans lequel le silicate d'ytterbium est n'importe lequel parmi l'Yb₂SiO₅ et l'Yb₂Si₂O₇.

3. Composant composite de matrice de céramique selon l'une quelconque des revendications 1 et 2, dans lequel
la couche de carbure de silicium a une épaisseur d'au moins 10 µm et d'au plus 50 µm,
la couche de silicium a une épaisseur d'au moins 50 µm et d'au plus 140 µm et
la couche mixte a une épaisseur d'au moins 75 µm et d'au plus 225 µm.

4. Composant composite de matrice de céramique selon la revendication 3, dans lequel la couche de silicium a une épaisseur d'au moins 50 µm et d'au plus 100 µm.

5. Composant composite de matrice de céramique selon la revendication 1, dans lequel la couche d'oxyde est formée d'oxyde d'hafnium monoclinique.

6. Composant composite de matrice de céramique selon l'une quelconque des revendications 1 et 2, dans lequel
la couche de carbure de silicium est un revêtement de déposition chimique en phase vapeur,
la couche de silicium et la couche mixte sont des revêtements vaporisés thermiques formés par une vaporisation thermique à basse pression et
la couche d'oxyde est un revêtement vaporisé thermique formé par une vaporisation thermique à l'air.

7. Composant composite de matrice de céramique selon l'une quelconque des revendications 1 et 2, dans lequel le substrat est formé d'un composite de matrice de céramique obtenu en combinant des fibres de carbure de silicium avec une matrice de carbure de silicium.

8. Utilisation d'un composant composite de matrice de céramique selon l'une quelconque des revendications 1 et 2, dans lequel le composant composite de matrice de céramique est utilisé dans un environnement dans lequel une température de surface du composant est de 1200°C à 1400°C et dans lequel une pression partielle de vapeur d'eau est de 30 kPa à 140 kPa.

9. Procédé de fabrication d'un composant composite de matrice de céramique revêtu avec des revêtements formant barrière environnementale, comprenant :
une étape de formation de substrat consistant à former un substrat d'un composite de matrice de céramique ;
une étape de déposition de couche de carbure de silicium consistant à déposer une couche de carbure de silicium sur une surface du substrat par déposition chimique en phase vapeur ;
une étape de déposition de couche de silicium consistant à déposer une couche de silicium sur une surface de la couche de carbure de silicium par une vaporisation thermique à basse pression ;
une étape de déposition de couche mixte consistant à déposer une couche mixte réalisée en un mélange de mullite et de silicate d'ytterbium sur une surface de la couche de silicium par vaporisation thermique à basse pression ; et
une étape de déposition de couche d'oxyde consistant à déposer une couche d'oxyde sur une surface de la couche mixte par vaporisation thermique d'air ; dans lequel
des fibres de renfort et/ou une matrice de céramique dans le composite de matrice de céramique est/sont formées de silicium ou de composé contenant du silicium, et
la couche d'oxyde est formée d'oxyde essentiellement contenant au moins un élément sélectionné dans le groupe constitué d'oxyde d'hafnium, de silicate d'hafnium, de silicate de lutétium, de silicate d'ytterbium, d'oxyde de titane, d'oxyde de zirconium, de titanate d'aluminium, de silicate d'aluminium et d'oxyde de lutétium-hafnium.

10. Procédé selon la revendication 9, dans lequel
dans l'étape de déposition de couche de carbure de silicium, la couche de carbure de silicium est déposée sur une épaisseur d'au moins 10 µm et d'au plus 50 µm,
dans l'étape de déposition de couche de silicium, la couche de silicium est déposée sur une épaisseur d'au moins 50 µm et d'au moins 140 µm et
dans l'étape de déposition de couche mélangée, la couche mélangée est déposée sur une épaisseur d'au moins 75 µm et d'au plus 225 µm.

11. Procédé selon la revendication 10, dans lequel dans l'étape de déposition de couche de silicium, la couche de silicium est déposée sur une épaisseur d'au moins 50 µm et d'au plus 100 µm.
